# EUROPEAN PATENT SPECIFICATION

(11) **EP 2 097 621 B1**
(45) Date of publication and mention of the grant of the patent: **30.11.2011**
(21) Application number: 07852255.4
(22) Date of filing: 12.12.2007
(51) Int. Cl.: F01N 1/08, F01N 1/12

(54) **CONTAINER DEVICE ADAPTED TO BE ARRANGED IN AN EXHAUST SYSTEM OF A COMBUSTION ENGINE**
ZUR ANORDNUNG IN EINEM ABGASSYSTEM EINES VERBRENNUNGSMOTORS AUSGEFÜHRTE BEHÄLTERVORRICHTUNG
DISPOSITIF CONTENEUR CONÇU DE SORTE À POUVOIR ÊTRE AGENCÉ DANS UN SYSTÈME D'ÉCHAPPEMENT D'UN MOTEUR À COMBUSTION

(30) Priority: 22.12.2006 SE 0602792
(43) Date of publication of application: 09.09.2009
(73) Proprietor: Scania CV Aktiebolag, 151 87 Södertälje (SE)
(72) Inventor: HÄGGKVIST, Anders, 141 70 Segeltorp (SE); NYGÅRD, Stefan, 795 70 Vikarbyn (SE); ÖQVIST, Disa, 117 59 Stockholm (SE)
(86) International application number: PCT/SE2007/050984
(87) International publication number: WO 2008/079085

(56) References cited:
- WO-A1-2004/033866
- WO-A1-2006/014129
- DE-A1- 19 955 013
- DE-C- 831 177

## Description

### BACKGROUND TO THE INVENTION, AND STATE OF THE ART

The invention relates to a container device adapted to being arranged in an exhaust system for a combustion engine.

Increasingly stringent requirements are being set for discharges of emissions from diesel-powered vehicles. To be able to meet these requirements, exhaust systems of vehicles powered by diesel engines are equipped with catalytic cleaners which inter alia reduce the amount of nitrogen oxides, and particle filters which reduce the amount of soot particles in the exhaust gases. Such exhaust cleaning components act largely as a low-pass filter. This means that low-frequency noise, which is the dominant portion of exhaust noise, passes almost undamped through the exhaust cleaning components. It is therefore necessary to provide the exhaust system with a further noise-damping volume which compensates for the volume occupied by the particle filter and the catalytic cleaner in the exhaust system.

WO 2004/033866 refers to a container device adapted to being arranged in an exhaust system for a combustion engine. The container device comprises an outer casing, a tubular element enclosed by said casing, and an exhaust passage for leading the exhaust gases through the container device. The exhaust passage comprise a first exhaust duct situated externally to the tubular element, a second exhaust duct situated internally to the tubular element and two spiral exhaust ducts adapted to leading the exhaust gases between the first exhaust duct and the second exhaust duct. Such a container device has a long exhaust duct and hence good noise-damping properties, particularly with respect to low-frequency noise, while at the same time being compact. The exhaust passage which leads exhaust gases through the container device is so configured that the exhaust gases undergo relatively low flow losses when they are led through the container device. The flow losses in the exhaust passage occur mainly at the points where the exhaust gases are led out from the spiral exhaust ducts and into the spiral exhaust ducts.

### SUMMARY OF THE INVENTION

The object of the present invention is to provide a container device so constructed that it has good noise-damping properties and occupies little space while at the same time subjecting exhaust gases which flow through the container device to very low flow losses.

The object indicated above is achieved with the container device mentioned in the introduction which is characterised by what is indicated in the characterising part of claim 1. The exhaust passage thus comprises a first exhaust duct arranged externally to a tubular element, a second exhaust duct arranged internally to the tubular element, and a spiral exhaust duct adapted to leading exhaust gases from the first exhaust duct to the second exhaust duct. Such a bidirectional exhaust passage makes it possible to achieve a very compact container device. The exhaust passage can here be of sufficient length to provide good damping of low-frequency noise. In an exhaust passage where the exhaust flow is led in various directions, it is important to avoid high flow resistance in the regions where the exhaust flow changes direction. High flow resistance in an exhaust passage of the kind mentioned occurs usually in the region where the exhaust gases are led out from the spiral exhaust duct and into the second exhaust duct. The exhaust gases leaving the spiral exhaust duct usually form a vortex before they are led into second exhaust duct. At the centre of such a vortex there is normally negative pressure which causes substantial flow losses. According to the invention, the first guide element is fitted in this region so that it substantially occupies the portion of the region where the local negative pressure normally occurs when the whirling exhaust gases leave the spiral exhaust duct. The occurrence of such local negative pressure in the region can thus be substantially entirely prevented. The flow losses of the exhaust gases in the region are therefore substantially reduced. According to a preferred embodiment of the present invention, the first guide element has a circular circumference which defines said path. Such a guide element has no edges or protruding portions which might cause flow losses to the exhaust gases when they flow along said path. The region at the centre of a vortex where negative pressure occurs may approximately have a substantially circular circumference. A corresponding circular-shaped guide element can therefore fill this region in a substantially optimum manner. With advantage, the first guide element has at least one portion with a circumference which progressively decreases towards the second exhaust duct. The guide element having an external surface configured in this way results in progressive widening of the exhaust passage towards the second exhaust duct, thereby facilitating the transfer of the exhaust gases from said path to the second exhaust duct. The first guide element may have a conical shape, making possible a substantially uniform transfer of exhaust gases from substantially every point round said path to the second exhaust duct.

According to another preferred embodiment of the invention, the container device comprises a second guide element adapted to blocking said path and preventing further flow of the exhaust gases along said path after a specified distance. Such a guide element may have an extent transversely across the path so that no exhaust gases can pass. The remaining exhaust gases in the path are therefore led into the second exhaust duct by the second guide element. With advantage, the second guide element is adapted to preventing flow of the exhaust gases along said path after they have circulated approximately one turn round the first guide element. The remaining exhaust gases which have already circulated one turn in the path are thus prevented from meeting the exhaust gases being led into the path. Such a second guide element makes it possible to reduce further the flow losses of the exhaust gases in the region.

According to another preferred embodiment of the present invention, a third guide element is arranged at an inlet aperture of the spiral exhaust duct in order to lead exhaust gases into the spiral exhaust duct. In this region the exhaust gases are also subject to flow losses which are not negligible. The presence of a suitably shaped guide element close to the inlet makes it possible for the exhaust gases to be led into the spiral exhaust duct with substantially reduced flow losses. The third guide element may comprise a suitably shaped curved guide surface which leads exhaust gases into the spiral exhaust duct. The exhaust gases are thus led gently into the spiral exhaust duct with low flow losses.

According to another preferred embodiment of the present invention, the spiral exhaust duct has an angle of rotation of 360° to 540°. A spiral exhaust duct reaches a significant length with a relative small angle of rotation. A spiral exhaust duct with an angle of rotation of just over one turn is often long enough to be able to provide good damping of low-frequency noise. The spiral exhaust duct and said guide element may be comprised in a removable modular unit of the container device. Such a modular unit makes the spiral exhaust duct easy to fit in and remove from the container device. Such modular units can be made in various sizes and versions. Thus modular units comprising spiral exhaust ducts of different lengths and dimensions can be adapted to combustion engines of different types and sizes. Said detachable modular unit preferably constitutes an endwall of the casing. Such a modular unit substantially constitutes a side cover which is very easy to fit to and remove from a remaining portion of the container device.

### BRIEF DESCRIPTION OF THE DRAWINGS

A preferred embodiment of the invention is described below by way of example with reference to the attached drawings, in which:
- Fig. 1: depicts a container device according to the present invention,
- Fig. 2: depicts a section through the container device at the plane A-A in Fig. 1 and
- Fig. 3: depicts a section through the container device at the plane B-B in Fig. 1.

### DETAILED DESCRIPTION OF A PREFERRED EMBODIMENT OF THE INVENTION

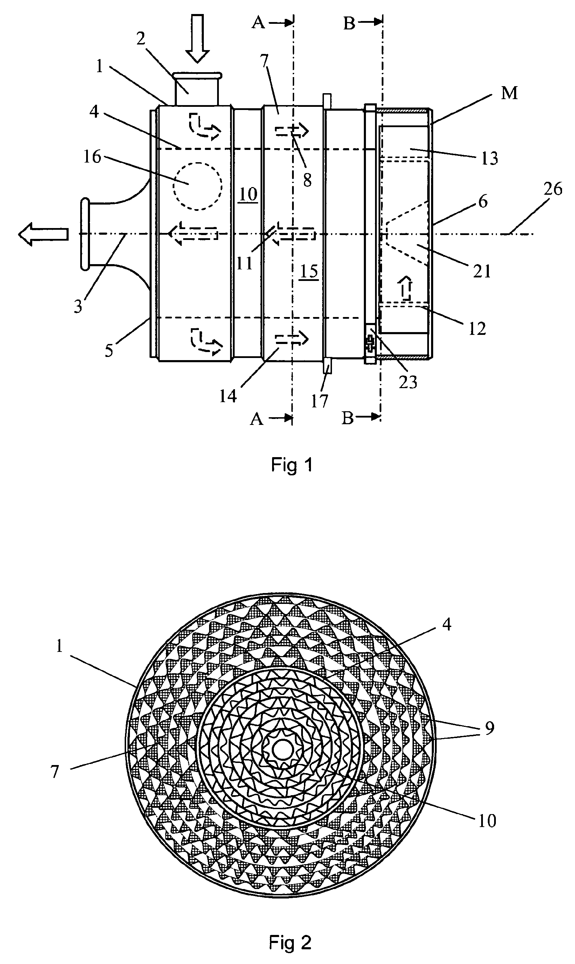

Fig. 1 depicts a container device adapted to being arranged in an exhaust system for a diesel-powered vehicle. The container device comprises an external casing 1 of substantially cylindrical shape. The casing 1 constitutes a closed external surface except at the points where an inlet 2 and an outlet 3 are provided for the exhaust gases. A pipe 4 with a circular cross-section is arranged within the casing 1 so that central axes 26 through the casing 1 and the pipe 4 coincide. The length of the pipe 4 is such that it extends from a first endwall 5 to a modular unit M which comprises a second endwall 6 of the casing 1.

The container device comprises exhaust cleaning components for cleaning the exhaust gases which flow through an exhaust passage which has an extent between the inlet 2 and the outlet 3 of the container device. A first exhaust cleaning component in the form of a particle filter 7 is arranged externally to the pipe 4. Fig. 2 depicts a section at a plane A-A through the particle filter 7. The particle filter 7 has a circular extent round the pipe 4. The particle filter 7 has a radial extent so that it completely fills the radial space between the pipe 4 and the casing 1. The particle filter 7 comprises elongate ducts adapted to leading the exhaust gases through the particle filter in substantially a first direction 8. The particle filter 7 has a constant cross-sectional shape in the direction of flow of the exhaust gases. The particle filter 7 comprises stop surfaces 9 arranged at suitable points along the extent of the elongate ducts. The stop surfaces 9 cause the exhaust gases to be led into adjacent elongate ducts in the particle filter. Soot particles in the exhaust gases are here intended to be caught and burn in the particle filter 7. A second exhaust cleaning component in the form of a catalytic cleaner 10 is arranged within the pipe 4. The catalytic cleaner 10 is arranged radially inside the particle filter 7. The catalytic cleaner 10 likewise comprises elongate ducts adapted to leading the exhaust gases in substantially a second direction 11 through the catalytic cleaner 10. The catalytic cleaner 10 has a constant cross-sectional shape in the direction of flow 11 of the exhaust gases. The catalytic cleaner 10 is adapted to effecting catalytic cleaning in order to reduce the content of nitrogen oxides in the exhaust gases.

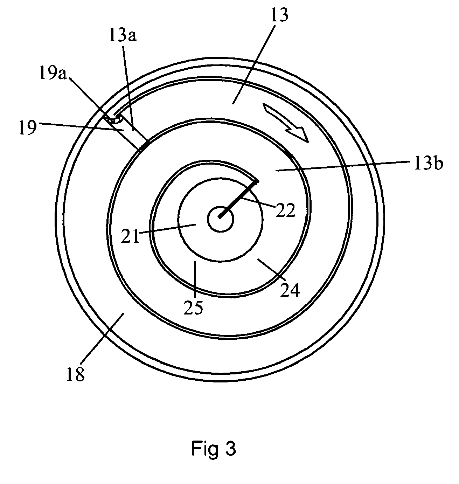

A basic principle for damping low-frequency noise is to create a long exhaust line between two spaces. An effective low-frequency noise damper with such an exhaust line which is straight occupies a great deal of space. Low-frequency noise is the dominant portion of the noise generated by a combustion engine. The container device is constructed according to this basic principle. To provide a long exhaust duct, the container device comprises a spiral exhaust duct 13. Fig. 3 depicts a section at a plane B which extends through the spiral exhaust duct 13. The spiral exhaust duct 13 is situated at the second endwall 6 of the casing 1. The spiral exhaust duct 13 has an extent between a radially externally situated inlet 13a and a radially internally situated outlet 13b. The spiral exhaust duct 13 has here an extent of about 1 ¼ turns, i.e. about 405°. The spiral exhaust duct 13 takes the form of a spiral profile 12 which constitutes wall surfaces of the spiral exhaust duct 13. The exhaust passage through the container comprises an outer axial exhaust duct 14 in which the exhaust gases inter alia flow through the particle filter 7. The exhaust gases are led thereafter in a radial direction inwards through said spiral exhaust duct 13. Finally, the exhaust gases are led through an axial exhaust duct 15 situated internally to the pipe 4. The combination of the axial exhaust ducts 14, 15 and the spiral exhaust duct 13 results in a very long exhaust line without the container device itself having to be of elongate shape. The container device can therefore be compact while at the same time having very good noise-damping properties.

A burner 16 may, where necessary, be arranged in the vicinity of the inlet 2 of the container device. The function of the burner 16 is to warm the exhaust gases to a temperature such that the soot particles can burn in the particle filter 7. Soot particles normally ignite at a temperature of about 600°C, but in most cases it is difficult to guarantee such a high exhaust temperature even with a high-performance burner 16. It is therefore usually necessary to lower the ignition temperature of the soot particles, which can be done by converting the various types of nitrogen oxides NOₓ which arise to nitrogen dioxide NO₂. There are substantially two methods for doing so. According to the first method known as CRT (Continuous Regeneration Trap) a separate oxidation catalytic cleaner is arranged for the purpose before the particle filter 7 in the direction of flow of the exhaust gases. In this case the soot particles ignite at about 225°C in the particle filter 7. According to a second method known as CSF (Catalytic Soot Filter) the particle filter 7 is lined with a suitable lining material so that the oxidation catalysis from NOₓ to NO₂ takes place directly on the surface of the particle filter 7. In this case the soot particles ignite at about 250°C. It is also possible to use various additives in the fuel to achieve a lowered ignition temperature of about 350°C in a conventional particle filter 7. In cases where a catalytic cleaner 10 which works according to SCR (Selective Catalytic Reduction) is used, undepicted injection means are adapted to adding an ammonia carrier substance, e.g. in the form of a urea solution. After the ammonia carrier has been added, it has to become hydrolysed and mixed with the exhaust gases in order to optimise the reduction by the catalytic cleaner 10 of the content in the exhaust gases of ammonia and nitrogen oxides to nitrogen gas and water.

The exhaust gases are led into the container device through the inlet 2. The exhaust gases are led from the inlet 2 to the outer axial exhaust duct 14, which has an extent along a substantially circular space external to the pipe 4. The exhaust gases undergo substantially uniform distribution before they are led in an axial direction externally to the pipe 4 towards the particle filter 7. Before the exhaust gases reach the particle filter 7, they are warmed, if necessary, by the burner 16 to a temperature such that ignition and burning of soot particles in the exhaust gases are possible in the particle filter 7. The exhaust gases are led in the first direction 8 through the elongate ducts of the particle filter 7. The stop surfaces 9 arranged at suitable points along the elongate ducts in the particle filter 7 direct the exhaust gases into adjacent elongate ducts. Depending on the regeneration system and the temperature, the soot particles thus caught in the particle filter 7 ignite and burn. The exhaust gases are thus caused to deviate a short distance sideways but flow mainly in the first direction 8 along a substantially straight line through the particle filter 7. The exhaust gases which flow out from the particle filter 7 are substantially free from soot particles.

The exhaust gases are led thereafter into the detachably fitted modular unit M which comprises said spiral exhaust duct 13. In the modular unit M, the exhaust gases are led initially to a region 18 which is situated radially externally about the spiral exhaust duct 13. The region 18 takes the form of a circular duct with a progressively increasing cross-sectional area for leading exhaust gases to an inlet aperture 13a to the spiral exhaust duct 13. A guide means 19 is arranged close to the inlet aperture to prevent the exhaust gases in the region 18 from bypassing the inlet aperture 13a. The guide means 19 comprises a portion with a curved surface 19a adapted to leading the most peripheral exhaust gases in the region 18 radially inwards and into the spiral exhaust duct 13 via the inlet aperture 13a. The exhaust gases can thus be led into the spiral exhaust duct 13 with small flow losses. No exhaust gases in the region 18 are thus led past the inlet aperture 13a. The exhaust gases are led thereafter through the spiral exhaust duct 13. The spiral exhaust duct 13 constitutes an elongate line connecting two spaces of the container, making it possible to achieve effective acoustic damping of low-frequency noise. The spiral exhaust duct 13 also provides a necessary mixing distance for the ammonia carrier so that it will substantially mix uniformly with the exhaust gases. The exhaust gases have a relatively gentle change of direction imparted to them as they pass through the spiral exhaust duct 13 with substantially negligible flow resistance. In the spiral exhaust duct 13, the exhaust gases flow in a plane which is substantially perpendicular to the first direction 8 and second direction 11 of flow of the exhaust gases.

The modular unit M comprises a conically shaped guide element 21 fastened to the second endwall 6 of the casing 1. The conical guide element 21 has a central axis which coincides with the central axis of the pipe 4 and of the container device. The conical guide element 21 is fastened in the second endwall 6. The conical guide element 21 has a fastening such that it has a decreasing circumference towards the second exhaust duct 15. The exhaust passage in this region thus has a progressively increasing cross-sectional area towards the second exhaust duct 15, facilitating the inflow of exhaust gases into the second exhaust duct 15. The conical guide element 21 is fitted in a region 24 which is situated radially internally to the spiral exhaust duct 13. When the exhaust gases flow out from the outlet 13b of the spiral exhaust passage in this region 24, they form a vortex so that at least a major portion of the exhaust gases are caused to flow in a path 25 which extends round the conical guide element 21. The conical guide element 21 occupies here a space at the centre of this vortex. Negative pressure normally occurs at the centre of a vortex, but applying the conical guide element 21 in this space substantially prevents the occurrence of such a space with negative pressure. The exhaust gases which flow out from the outlet 13b will thus to some extent circulate in said path 25 round the conical guide element 21 before they are diverted in an axial direction and led into the pipe 4 and towards the catalytic cleaner 10. To prevent the exhaust gases circulating more than one turn round the conical guide element 21 and meeting the exhaust gases being led out through the outlet aperture, a guide element 22 is arranged in the path 25 close to the outlet aperture 13b. The guide element 22 extends transversely across the path 25 and causes the remaining exhaust gases which have not already been diverted in an axial direction to be led into the second exhaust duct 15. By means of the guide elements 21 and 22 the flow losses of the exhaust gases in the region 24 can be kept to a very low level.

When the exhaust gases reach the catalytic cleaner 10, they flow into its elongate ducts which allow a flow of the exhaust gases in the second direction of flow 11 which is parallel with and in the opposite direction to the first direction of flow 8. In the catalytic cleaner 10, the content of nitrogen oxides and ammonia in the exhaust gases is reduced to nitrogen gas and water. Thereafter the exhaust gases substantially free from soot particles and nitrogen oxides flow out through the outlet 3. The outlet 3 has a well-rounded decreasing shape which connects the pipe 4 to a narrower pipe of the exhaust system. The shape of the outlet 3 causes the exhaust gases here likewise to undergo very little flow resistance. The spiral exhaust duct 13 is comprised in a detachable separate module M which is easy to fit and remove. Thus the endwall 6 and the spiral exhaust duct 13 with guide elements 19, 21, 22 can be fitted and removed as a unit. Such modular units M can be manufactured in various versions and sizes. Thus modular units M comprising spiral exhaust ducts which differ in number, length and cross-sectional area can be fitted in the container device, inter alia depending on the type and size of combustion engine. The fitting of the modular unit may be by tension strap 23.

The invention is in no way limited to the embodiment described but may be varied freely within the scopes of the claims.

## Claims

1. A container device adapted to being arranged in an exhaust system for a combustion engine, which container device comprises an outer casing (1), a tubular element (4) surrounded by said casing (1), and an exhaust passage for leading the exhaust gases through the container device, which exhaust passage comprises a first exhaust duct (14) situated externally to the tubular element (4), a second exhaust duct (15) situated internally to the tubular element (4), and a spiral exhaust duct (13) adapted to leading the exhaust gases from the first exhaust duct (14) to a region (24) situated radially internally to the spiral exhaust duct (13) before the exhaust gases are led into the second exhaust duct (15), **characterised in that** the container device comprises a first guide element (21) fitted in said region (24), the shape and positioning of which first guide element (21) are such that exhaust gases flowing out from the spiral exhaust duct (13) are at least partly led in a path round the first guide element (21) before they are led into the second exhaust duct (15), and a third guide element (19) arranged at an inlet aperture (13a) of the spiral exhaust duct (13) which third guide element (19) has a curved guide surface (19a) for leading exhaust gases into the spiral exhaust duct (13).

2. A container device according to claim 1, **characterised in that** the first guide element (21) has a circular circumference which defines said path (25).

3. A container device according to claim 1 or 2, **characterised in that** the first guide element (21) has at least one portion with a progressively decreasing circumference towards the second exhaust duct (15).

4. A container device according to claim 3, **characterised in that** the first guide element (21) has a conical shape.

5. A container device according to any one of the foregoing claims, **characterised in that** the container device comprises a second guide element (22) is adapted to blocking said path (25) and preventing further flow of the exhaust gases along said path (25) after a specified distance.

6. A container device according to claim 5, **characterised in that** the second guide element (22) is adapted to preventing flow of the exhaust gases along said path (25) after they have circulated approximately one turn round the first guide element (21).

7. A container device according to any one of the foregoing claims, **characterised in that** the spiral exhaust duct (13) has an angle of rotation of 360° to 540°.

8. A container device according to any one of the foregoing claims, **characterised in that** the spiral exhaust duct (13) and said guide elements (19, 21, 22) are comprised in a removable modular unit (M) of the container device.

## Patentansprüche

1. Behältervorrichtung, die dazu geeignet ist, um in einer Abgasanlage für einen Verbrennungsmotor angeordnet zu sein, wobei die Behältervorrichtung umfasst:
ein äußeres Gehäuse (1),
ein rohrförmiges Element (4), das von dem Gehäuse (1) umgeben ist, und
eine Abgasleitung zum Führen der Abgase durch die Behältervorrlchtung, wobei die Abgasleitung umfasst:
einen ersten Abgaskanal (14), der außen an dem rohrförmigen Element (4) angeordnet ist,
einen zweiten Abgaskanal (15), der innen an dem rohrförmigen Element (4) angeordnet ist, und
einen spiralförmigen Abgaskanal (13), der dazu geeignet ist, um die Abgase von dem ersten Abgaskanal (14) zu einem Bereich (24) zu leiten, der radial innerhalb des spiralförmigen Abgaskanals (13) angeordnet ist, bevor die Abgase in den zweiten Abgaskanal (15) geleitet werden,
**dadurch gekennzeichnet, dass** die Behältervorrichtung umfasst: ein erstes Führungselement (21), das in dem Bereich (24) angebracht ist, wobei die Form und die Anordnung des ersten Führungselements (21) derart sind, dass die Abgase, die aus der spiralförmigen Abgaskanal (13) austreten, zumindest teilweise in einem Pfad um das erste Führungselement (21) herum geführt werden, bevor sie in den zweiten Abgaskanal (15) geführt werden, und
ein drittes Führungselement (19), das an einer Einlassöffnung (13a) des spiralförmigen Abgaskanals (13) angeordnet ist, wobei das dritte Führungselement (19) eine gekrümmte Führungsfläche (19a) aufweist zum Führen der Abgase in die spiralförmige Abgasführung (13).

2. Behältervorrichtung nach Anspruch 1,
**dadurch gekennzeichnet, dass** das erste Führungselement (21) einen kreisförmigen Umfang aufweist, der den Pfad (25) definiert.

3. Behältervorrichtung nach Anspruch 1 oder 2,
**dadurch gekennzeichnet, dass** das erste Führungselement (21) zumindest einen Abschnitt mit einem progressiv abnehmenden Umfang in Richtung der zweiten Abgasführung (15) aufweist.

4. Behältervorrichtung nach Anspruch 3,
**dadurch gekennzeichnet, dass** das erste Führungselement (21) eine konische Form aufweist.

5. Behältervorrichtung nach einem der vorangehenden Ansprüche,
**dadurch gekennzeichnet, dass** die Behältervorrichtung ein zweites Führungselement (22) umfasst, das dazu geeignet ist, um den Pfad (25) zu blockieren und um einen weiteren Strom der Abgase entlang des Pfads (25) nach einer bestimmten Strecke zu verhindern.

6. Behältervorrichtung nach Anspruch 5,
**dadurch gekennzeichnet, dass** das zweite Führungselement (22) dazu geeignet ist, um den Strom der Abgase entlang des Pfads (25) zu verhindern, nachdem sie ungefähr um eine Umdrehung um das erste Führungselement (21) zirkuliert sind.

7. Behältervorrichtung nach einem der vorangehenden Ansprüche,
**dadurch gekennzeichnet, dass** die spiralförmige Abgasführung (13) einen Drehwinkel von 360° bis 540° aufweist.

8. Behältervorrichtung nach einem der vorangehenden Ansprüche,
**dadurch gekennzeichnet, dass** die spiralförmige Abgasführung (13) und die Führungselemente (19, 21, 22) in einer austauschbaren Moduleinheit (M) der Behältervorrichtung umfasst sind.

## Revendications

1. Dispositif conteneur apte à être monté dans un système d'échappement pour un moteur à combustion interne, lequel dispositif conteneur comprend une enveloppe extérieure (1), un élément tubulaire (4), entouré par ladite enveloppe (1), et un passage d'échappement destiné à conduire les gaz d'échappement à travers le dispositif conteneur, lequel passage d'échappement comprend un premier conduit d'échappement (14) situé extérieurement par rapport à l'élément tubulaire (4), un deuxième conduit d'échappement (15) situé intérieurement par rapport à l'élément tubulaire (4) et un conduit d'échappement spiral (13), apte à conduire les gaz d'échappement du premier conduit d'échappement (14) à une région (24) située radialement intérieurement par rapport au conduit d'échappement spiral (13) avant que les gaz d'échappement soient introduits dans le deuxième conduit d'échappement (15), **caractérisé en ce que** le dispositif conteneur comprend un premier élément de guidage (21) monté dans ladite région (24), la forme et le positionnement du premier élément de guidage (21) étant tels que les gaz d'échappement sortant du conduit d'échappement spiral (13) soient au moins partiellement conduits dans un trajet entourant le premier élément de guidage (21) avant qu'ils soient introduits dans le deuxième conduit d'échappement (15) et un troisième élément de guidage (19) disposé à une ouverture d'entrée (13a) du conduit d'échappement spiral (13), lequel le troisième élément de guidage (19) possède une surface de guidage incurvée (19a) servant à introduire les gaz d'échappement dans le conduit d'échappement spiral (13)

2. Dispositif conteneur selon la revendication 1, **caractérisé en ce que** le premier élément de guidage (21) a une circonférence circulaire qui définit ledit trajet (25).

3. Dispositif conteneur selon la revendication 1 ou 2, **caractérisé en ce que** le premier élément de guidage (21) a au moins une partie présentant une circonférence qui décroît progressivement en direction du deuxième conduit d'échappement (15).

4. Dispositif conteneur selon la revendication 3, **caractérisé en ce que** le premier élément de guidage (21) a une forme conique.

5. Dispositif conteneur selon une quelconque des revendications précédentes, **caractérisé en ce que** le dispositif conteneur comprend un deuxième élément de guidage (22) qui est apte à fermer ledit trajet (25) et à empêcher les gaz d'échappement de continuer à s'écouler le long dudit trajet (25) après une distance spécifiée.

6. Dispositif conteneur selon la revendication 5, **caractérisé en ce que** le deuxième élément de guidage (22) est apte à empêcher les gaz d'échappement de s'écouler le long dudit trajet (25) après avoir parcouru environ un tour autour du premier élément de guidage (21).

7. Dispositif conteneur selon une quelconque des revendications précédentes, **caractérisé en ce que** ledit conduit d'échappement spiral (13) a un angle de rotation de 360° à 540°.

8. Dispositif conteneur selon une quelconque des revendications précédentes, **caractérisé en ce que** le conduit d'échappement spiral (13) et lesdits éléments de guidage (19, 21, 22) sont inclus dans une unité modulaire amovible (M) du dispositif conteneur.
